# EUROPEAN PATENT APPLICATION

(11) **EP 4 468 807 A1**
(43) Date of publication of application: **27.11.2024**
(21) Application number: 23752454.1
(22) Date of filing: 13.02.2023
(51) Int. Cl.: H04W 72/12

(54) **COMMUNICATION METHOD AND RELATED APPARATUS**

(30) Priority: 14.02.2022 CN 202210135537
(71) Applicant: Huawei Technologies Co., Ltd., Shenzhen, Guangdong 518129 (CN)
(72) Inventor: XU, Bin, Shenzhen, Guangdong 518129 (CN)
(74) Representative: Maiwald GmbH
(86) International application number: PCT/CN2023/075627
(87) International publication number: WO 2023/151676

(57) **Abstract**

This application discloses a communication method and a related apparatus. In the method, a terminal triggers TA reporting and sends a TA report. The TA report includes position information or TA information of the terminal. If the TA report is successfully sent, the triggered TA reporting is canceled. In other words, before the TA report is successfully sent, the triggered TA reporting is not canceled. In this way, when there is another available uplink resource, the terminal may send the TA report again over the uplink resource. Therefore, a delay caused by re-triggering the TA reporting is reduced, and a success rate of reporting the TA report is increased.

## Description

This application claims priority to Chinese Patent Application No. 202210135537.3, filed with the China National Intellectual Property Administration on February 14, 2022 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

In mobile communication, as a terminal or a network device moves, a round trip delay (Round Trip Delay, RTD) between the terminal and the network device continuously changes. Especially when one of the terminal and the network device moves very fast, the RTD also changes very fast accordingly. Correspondingly, a timing advance (Timing Advance, TA) required for uplink synchronization also changes. If the network device does not know a latest TA value, communication efficiency is affected. Therefore, a TA reporting mechanism is introduced on a terminal side. In the TA reporting mechanism, the terminal may calculate a latest TA value, and trigger TA reporting when a variation of the calculated TA value is greater than or equal to a specific threshold. In this way, when the terminal has an available uplink resource, the terminal generates and sends a TA report based on the triggered TA reporting, to notify the network device of the current latest TA value of the terminal.

However, because quality of a radio link changes, after the TA report is sent, the network device may not necessarily successfully receive the TAreport. Therefore, how to improve a success rate of reporting the TA report is an urgent problem to be resolved.

### SUMMARY

This application provides a timing advance reporting method and a related apparatus, to increase a success rate of reporting a TA report.

According to a first aspect, this application provides a communication method. The method may be performed by a first communication apparatus. The first communication apparatus may be a communication device or a communication apparatus that can support the communication device in implementing a function required in the method, for example, a chip. For example, the first communication apparatus is a terminal device, a chip that is disposed in the terminal device and that is configured to implement a function of the terminal device, or another component configured to implement a function of the terminal device. In the following description process, a terminal is used as an example of an execution body for description.

In the method, the terminal triggers TA reporting, and sends a TA report. The TA report includes position information or TA information of the terminal. If the TA report is successfully sent, the triggered TA reporting is canceled.

The TA report indicates a TA value. The triggered TA reporting includes but is not limited to TA reporting in a pending state or a triggered state. Optionally, the TA report is sent by using medium access control control element (medium access control control control element, MAC CE) signaling or radio resource control (radio resource control, RRC) signaling. Optionally, after triggering the TA reporting, the terminal may generate and send the TA report when there is an available uplink resource.

It may be learned that the terminal cancels the triggered TA reporting if the TA report is successfully sent. In other words, before the TA report is successfully sent, the triggered TA reporting is not canceled. In this way, when there is another available uplink resource, the terminal sends the TA report again by using the uplink resource. Therefore, a success rate of reporting the TA report is increased.

In an optional implementation, the method further includes: triggering, by the terminal, the TA reporting based on a variation between a second TA value and a first TA value. The first TA value is a TA value indicated by a latest successfully sent TA report, and the second TA value is a TA value that determines triggering of the TA reporting. It may be learned that the terminal determines, based on the TA value indicated by the latest successfully sent TA report, whether to trigger the TA reporting. This helps quickly meet a trigger condition if a previous TA report is not successfully sent, and trigger next TA reporting to send the TA report.

Optionally, the triggering the TA reporting based on a variation between a second TA value and a first TA value includes: triggering, by the terminal, the TA reporting if the variation between the second TA value and the first TA value is greater than or equal to a TAreporting trigger threshold.

In an optional implementation, the method further includes: before the TA report is successfully sent, triggering a random access procedure if a time alignment timer expires. It may be learned that this implementation helps trigger the random access procedure in a timely manner when it is impossible to know successful sending of the TA report in a long time. In addition, because the triggered TA reporting has not been canceled, the TA reporting is still in the pending state. Therefore, the TA report may be sent again in the random access procedure, or the TA report may be sent again after the random access procedure ends. In this way, the terminal device may send the TA report through the random access procedure, so that a network device learns of the TA report of the terminal device.

In an optional implementation, the method further includes: The terminal starts a first timer after sending the TA report. The first timer is configured to prohibit sending of the TA report during running. The TA report may be specific (for example, another TA report other than the TA report that has been sent) and may also be general (that is, all TA reports). Therefore, a resource overhead problem caused by sending another TA report or all TA reports again before it is determined that the TA report is successfully sent is avoided.

In an optional implementation, the method further includes: The terminal starts a first timer after sending the TA report. The first timer is configured to prohibit triggering of the TA reporting during running. It may be learned that, in this implementation, before the first timer expires, triggering of new TA reporting is prohibited, thereby helping reduce resource overheads caused by a plurality of times of TA reporting.

In an optional implementation, the method further includes: Before the TA report is successfully sent by the terminal, if a quantity of times of triggering the TA reporting exceeds a preset threshold, it indicates that a radio link between the terminal and the network device cannot meet a communication requirement. In this case, the terminal triggers the random access procedure. Alternatively, it is considered that a radio link failure occurs, and then RRC connection reestablishment is performed.

In an optional implementation, the TA value indicated by the TA report is a TA value during latest TA reporting triggered before the TA report is sent. Alternatively, the TA value indicated by the TA report is a TA value during generation of the TA report. Alternatively, the TA value indicated by the TA report is a TA value calculated by the terminal based on a packetization time of the TA report in a process of sending the TA report.

In an optional implementation, the method further includes: The terminal receives feedback information. The feedback information indicates that the TA report is successfully sent. It may be learned that, in this implementation, the terminal may explicitly learn, via the feedback information, that the TA report is successfully sent.

In this implementation, the feedback information may further indicate that the TA report fails to be sent. Alternatively, when the feedback information is not received by the time that a second timer expires, the terminal determines that the TA report fails to be sent. The second timer is started after the TA report is sent. In this way, this helps the terminal send the TA report again in a timely manner.

Optionally, the feedback information may be carried in DCI, MAC CE signaling, RRC signaling, or a TA command.

In another optional implementation, the method further includes: If a hybrid automatic repeat request HARQ process schedules a new transmission, the terminal determines that the TA report is successfully sent. The HARQ process is a HARQ process used to send the TA report. In other words, the terminal may receive the DCI, and if the HARQ process used to send the TA report in the DCI schedules a new transmission, the terminal determines that the TA report is successfully sent.

According to a second aspect, this application further provides a communication method. A terminal is used as an example of an execution body for description. In the method, the terminal determines, based on a variation between a second TA value and a first TA value, whether to trigger TA reporting. The first TA value is a TA value indicated by a latest successfully sent TA report, and the second TA value is a TA value that determines triggering of the TA reporting.

Optionally, the second TA value may be a latest TA value calculated by the terminal or a TA value calculated when the terminal determines whether to trigger the TA reporting.

In an optional implementation, in the method, the terminal triggers the TA reporting based on the variation between the second TA value and the first TA value. The terminal sends a TA report. After the TA report is sent, the terminal cancels the triggered TA reporting. It may be learned that in this implementation, after the terminal triggers the TA reporting, the TA reporting is in a waiting (or referred to as pending, or referred to as triggered) state. After sending the TA report, the terminal cancels the triggered TA reporting. In other words, the terminal cancels the TA reporting in a pending state. Even if the TA report is not successfully sent (or it is not sure whether the TA report is successfully sent), the terminal may trigger next TA reporting as soon as possible based on the variation between the second TA value and the first TA value, so that a network device can also learn of a latest TA report as soon as possible.

In another optional implementation, in the method, the terminal triggers the TA reporting based on the variation between the second TA value and the first TA value. The terminal sends a TA report. If the TA report is sent successfully, the terminal cancels the triggered TA reporting. It may be learned that in this implementation, the TA reporting is in a pending state, and the terminal may send the TA report again in a timely manner. In addition, the terminal may also trigger next TA reporting and send a next TA report as soon as possible based on the variation between the second TA value and the first TA value, so that the network device can learn of a latest TA report as soon as possible.

How the terminal learns whether the TAreport is successfully sent may be implemented according to several implementations described in the first aspect. For example, the terminal receives feedback information, and the feedback information indicates that the TA report is successfully sent, so that the terminal learns that the TA report is successfully sent. For another example, whether the TA report is successfully sent is determined based on whether the HARQ process schedules a new transmission. For details, refer to related descriptions of the first aspect. Details are not described herein again.

According to a third aspect, this application further provides a communication method. The method may be performed by a second communication apparatus. The second communication apparatus may be a communication device or a communication apparatus that can support the communication device in implementing a function required in the method, for example, a chip. For example, the second communication apparatus is a network device (for example, a base station), a chip that is disposed in the network device and that is configured to implement a function of the network device, or another component configured to implement a function of the network device. The communication method may correspond to the communication method according to the first aspect or the second aspect, and is described from a perspective of the network device. The network device is used as an example of an execution body for description.

In the method, the network device receives a TA report, where the TA report includes position information or TA information of a terminal. The network device sends first information, where the first information indicates that the TA report is successfully sent or indicates that a HARQ process schedules a new transmission. The HARQ process is a HARQ process used to send the TA report.

It may be learned that the network device may introduce an acknowledgment mechanism for the TA report reported by the terminal, so that the terminal can learn that TA report is successfully sent, thereby increasing a success rate of reporting the TA report.

Optionally, the first information may further indicate that the TA report fails to be sent or indicates that the HARQ process schedules a retransmission, to notify the terminal that the TA report fails to be sent.

Optionally, the first information is carried in DCI, RRC signaling, MAC CE signaling, or a TA command.

Optionally, the TA report is received via MAC CE signaling, a TA command, or RRC signaling.

Optionally, the first information may include but is not limited to the feedback information according to the first aspect.

According to a fourth aspect, this application provides a communication apparatus. The communication apparatus may be a terminal, or may be an apparatus in a terminal, or may be an apparatus that can be used in combination with a terminal. The communication apparatus may alternatively be a chip system. The communication apparatus may perform the method according to the first aspect or the second aspect. A function of the communication apparatus may be implemented by hardware, or may be implemented by hardware executing corresponding software. The hardware or the software includes one or more units or modules corresponding to the foregoing function. The unit or module may be software and/or hardware.

In an optional implementation, the communication apparatus may include a processing unit and a communication unit, and may perform the communication method according to the first aspect.

The processing unit is configured to trigger timing advance TA reporting.

The communication unit is configured to send a TA report. The TA report includes position information or TA information of a terminal.

The processing unit is further configured to cancel the triggered TA reporting if the TA report is successfully sent.

It may be learned that, before the TA report is successfully sent, the communication apparatus does not cancel the triggered TA reporting. In this way, if there is another available uplink resource, the terminal continues to send the TA report over the uplink resource. Therefore, a success rate of reporting the TA report is increased.

In an optional implementation, the processing unit is configured to trigger the TA reporting based on a variation between a second TA value and a first TA value. The first TA value is a TA value indicated by a latest successfully sent TA report, and the second TA value is a TA value that determines triggering of the TA reporting.

In an optional implementation, the processing unit is further configured to: before the TA report is successfully sent, trigger a random access procedure if a time alignment timer expires.

In an optional implementation, the processing unit is further configured to start a first timer after the TA report is sent. The first timer is configured to prohibit sending of the TA report during running.

In an optional implementation, the TA value indicated by the TA report is a TA value during latest TA reporting triggered before the TA report is sent. Alternatively, the TA value indicated by the TA report is a TA value during generation of the TA report.

In an optional implementation, the communication unit is further configured to receive feedback information. The feedback information indicates that the TA report is successfully sent. Alternatively, the processing unit is further configured to: if a hybrid automatic repeat request HARQ process schedules a new transmission, determine that the TA report is successfully sent. The HARQ process is a HARQ process used to send the TA report.

In an optional implementation, the feedback information indicates that the TA report fails to be sent. Alternatively, the processing unit is further configured to: if the feedback information is not received by the time that a second timer expires, determine that the TA report fails to be sent. The second timer is started after the TA report is sent.

In an optional implementation, the feedback information is carried in DCI, MAC CE signaling, or RRC signaling.

In an optional implementation, the TA report is sent by using MAC CE signaling, RRC signaling, or a TA command.

In an optional implementation, that the processing unit triggers TA reporting based on a variation between a second TA value and a first TA value is specifically: triggering the TA reporting if the variation between the second TA value and the first TA value is greater than or equal to a TA reporting trigger threshold.

In another optional implementation, the communication apparatus may include a processing unit, and may perform the communication method according to the second aspect.

The processing unit is configured to determine, based on a variation between a second TA value and a first TA value, whether to trigger TA reporting. The first TA value is a TA value indicated by a latest successfully sent TA report, and the second TA value is a TA value that determines triggering of the TA reporting.

Optionally, the second TA value may be a latest TA value calculated by the terminal or a TA value calculated when the terminal determines whether to trigger the TA reporting.

In an optional implementation, the communication apparatus includes a communication unit; and
a processing unit, configured to trigger TA reporting based on a variation between a second TA value and a first TA value.

The communication unit is configured to send a TA report.

The processing unit is further configured to cancel the triggered TA reporting after the TA report is sent.

It may be learned that in this implementation, after the terminal triggers the TA reporting, the TA reporting is in a waiting (or referred to as pending, or referred to as triggered) state. After sending the TA report, the terminal cancels the triggered TA reporting. In other words, the terminal cancels the TA reporting in a pending state. Even if the TA report is not successfully sent (or it is not sure whether the TA report is successfully sent), the terminal may trigger next TA reporting as soon as possible based on the variation between the second TA value and the first TA value, so that a network device can also learn of a latest TA report as soon as possible.

In another optional implementation, in an optional implementation, the communication apparatus includes a communication unit; and
a processing unit, specifically configured to trigger TA reporting based on a variation between a second TA value and a first TA value.

The communication unit is configured to send a TA report.

The processing unit is further configured to cancel the triggered TA reporting if the TA report is successfully sent.

It may be learned that in this implementation, the TA reporting is in a pending state, and the terminal may send the TA report again in a timely manner. In addition, the terminal may also trigger next TA reporting and send a next TA report as soon as possible based on the variation between the second TA value and the first TA value, so that the network device can learn of a latest TA report as soon as possible.

For operations performed by the communication apparatus and beneficial effects, refer to the method and beneficial effects according to the first aspect or the second aspect.

According to a fifth aspect, this application provides a communication apparatus. The communication apparatus may be a network device, or may be an apparatus in a network device, or may be an apparatus that can be used in combination with a network device. The communication apparatus may perform the method according to the third aspect. A function of the communication apparatus may be implemented by hardware, or may be implemented by hardware executing corresponding software. The hardware or the software includes one or more units or modules corresponding to the foregoing function. The unit or module may be software and/or hardware.

In an optional implementation, the apparatus includes a communication unit. The communication unit is configured to receive a TA report, where the TA report includes position information or TA information of a terminal. The communication unit is further configured to send first information, where the first information indicates that the TA report is successfully sent or indicates that a new transmission is scheduled using a hybrid automatic repeat request HARQ process, where the HARQ process is a HARQ process used to send the TA report.

In an optional implementation, the first information is carried in downlink control information DCI, medium access control control element MAC CE signaling, or radio resource control RRC signaling. Optionally, the first information may include but is not limited to the feedback information according to the first aspect.

In an optional implementation, the TA report is received via MAC CE signaling, RRC signaling, or a TA command.

For operations performed by the communication apparatus and beneficial effects, refer to the method and beneficial effects according to the third aspect.

According to a sixth aspect, this application provides a computer-readable storage medium. The storage medium stores a computer program or instructions. When the computer program or the instructions are executed by a communication apparatus, the method in any one of the first aspect to the third aspect or any possible implementation of the first aspect to the third aspect is implemented.

According to a seventh aspect, this application provides a computer program product including instructions. When a communication apparatus reads and executes the instructions, the communication apparatus is enabled to perform the method in any one of the first aspect to the third aspect or any possible implementation of the first aspect to the third aspect.

According to an eighth aspect, this application provides a communication system, including at least one communication apparatus configured to perform the method according to the first aspect or the second aspect, and at least one communication apparatus configured to perform the method according to the third aspect. Alternatively, the communication system includes at least one communication apparatus according to the fourth aspect, and at least one communication apparatus according to the fifth aspect.

According to a ninth aspect, this application provides a circuit. The circuit is coupled to a memory, and the circuit is configured to perform the method in the first aspect to the third aspect or any possible implementation in the first aspect to the third aspect. The circuit may include a chip circuit.

### BRIEF DESCRIPTION OF DRAWINGS

FIG. 1a is a diagram of a network architecture to which an embodiment of this application is applicable;
FIG. 1b is a diagram of a network architecture in a scenario 1 to which an embodiment of this application is applicable;
FIG. 1c is a diagram of a network architecture in a scenario 2 to which an embodiment of this application is applicable;
FIG. 2 is a diagram of uplink out-of-synchronization caused by a transmission delay and uplink synchronization implemented using a timing advance;
FIG. 3 is a schematic flowchart of a communication method according to an embodiment of this application;
FIG. 4 is a schematic flowchart of another communication method according to an embodiment of this application;
FIG. 5 is a schematic flowchart of still another communication method according to an embodiment of this application;
FIG. 6 is a schematic flowchart of still another communication method according to an embodiment of this application;
FIG. 7 is a diagram of a structure of a communication apparatus according to an embodiment of this application; and
FIG. 8 is a diagram of a structure of another communication apparatus according to an embodiment of this application.

### DESCRIPTION OF EMBODIMENTS

The following describes specific embodiments of this application in detail with reference to the accompanying drawings.

In embodiments of this application, a network device may also be referred to as an access network device. The access network device may be a device that provides access for a terminal, and may include a radio access network (radio access network, RAN) device and an AN device. The RAN device is mainly a wireless network device in a 3GPP network, and the AN device may be a non-3GPP defined access network device. The RAN device is mainly responsible for radio resource management, quality of service (quality of service, QoS) management, data compression and encryption, and other functions on an air interface side. The RAN device may include various forms of base stations, for example, a macro base station, a micro base station (which may also be referred to as a small cell), a relay station, an access point, and a balloon station. In systems using different radio access technologies, names of devices having a base station function may be different. For example, in a long term evolution (long term evolution, LTE) system or in a fifth generation (5th generation, 5G), a sixth generation (6th generation, 6G), and even a seventh generation (7th generation, 7G) system, a network device may be referred to as: a RAN or a next generation NodeB (next-generation Node base station, gNB), an evolved NodeB (evolved NodeB, eNB or eNodeB), a network device controller (base station controller, BSC), a network device transceiver station (base transceiver station, BTS), a home network device (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transceiver node (transmission and reception point, TRP), a transmission point (transmission point, TP), or the like; or one or a group of (including a plurality of antenna panels) antenna panels of a network device in a 5G system, or may be a network node that forms a gNB or a transmission point, for example, a baseband unit (BBU), a distributed unit (distributed unit, DU), or a roadside unit (roadside unit, RSU) in vehicle to everything (vehicle to everything, V2X) or an intelligent driving scenario.

In some deployments, the gNB or the transmission point may include a central unit (central unit, CU), a DU, and the like. The gNB or the transmission point may further include a radio unit (radio unit, RU). The CU implements some functions of the gNB or the transmission point, and the DU implements some functions of the gNB or the transmission point. For example, the CU implements functions of a radio resource control (radio resource control, RRC) layer and a packet data convergence protocol (packet data convergence protocol, PDCP) layer. The DU implements functions of a radio link control (radio link control, RLC) layer, a media access control (media access control, MAC) layer, and a physical (physical, PHY) layer. Information at the RRC layer eventually becomes information at the physical layer, or is converted from information at the physical layer. Therefore, in this architecture, higher layer signaling, such as RRC layer signaling or PDCP layer signaling, may also be considered as being sent by the DU, or sent by the DU and the RU. It may be understood that the network device may be a CU node, a DU node, or a device including a CU node and a DU node. Optionally, the network device may alternatively be an auxiliary communication device, for example, a satellite.

In embodiments of this application, the terminal is a device having a wireless transceiver function, and may be a device deployed on land, including an indoor device or an outdoor device, a handheld device, a wearable device, or a vehicle-mounted device, may be deployed on water (for example, on a ship), or may be deployed in the air (for example, on an airplane, a balloon, or a satellite). The terminal may be a mobile phone (mobile phone), a tablet computer (Pad), a computer having a wireless transceiver function, a virtual reality (virtual reality, VR) terminal device, an augmented reality (augmented reality, AR) terminal device, a wireless terminal in industrial control (industrial control), a vehicle-mounted terminal device, a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a wearable terminal device, or the like. The terminal sometimes may also be referred to as a terminal device, user equipment (user equipment, UE), an access terminal device, a vehicle-mounted terminal, an industrial control terminal, a UE unit, a UE station, a mobile station, a mobile console, a remote station, a remote terminal device, a mobile device, a UE agent, a UE apparatus, or the like. The terminal may alternatively be fixed or movable.

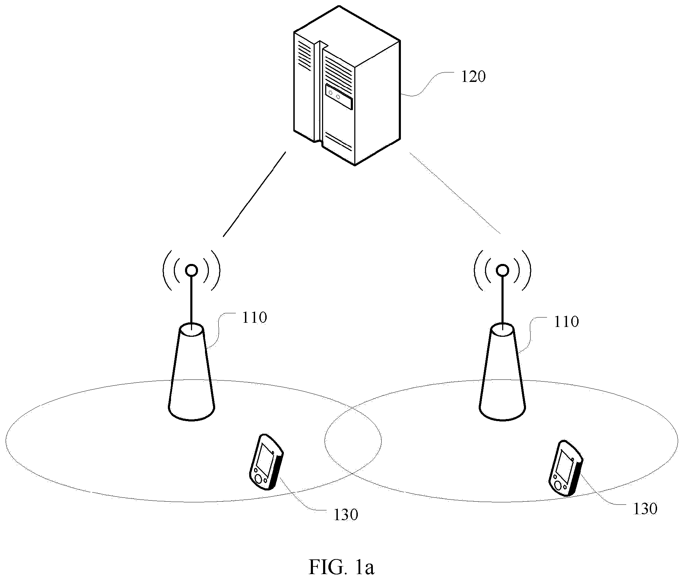

FIG. 1a is a diagram of a network architecture to which an embodiment of this application is applicable. As shown in FIG. 1a, a terminal device 130 may access a wireless network, to obtain a service of an external network (for example, the Internet) over the wireless network, or communicate with another device over the wireless network, for example, may communicate with another terminal device. The wireless network includes a radio access network (radio access network, RAN) device 110 and a core network (core network, CN) device 120. The RAN device 110 is configured to connect the terminal device 130 to the wireless network, and the CN device 120 is configured to manage the terminal device and provide a gateway for communicating with an external network. It should be understood that a quantity of devices in a communication system shown in FIG. 1a is merely for illustration, and embodiments of this application are not limited thereto. In actual application, the communication system may further include more terminal devices 130 and more RAN devices 110, or may further include another device.

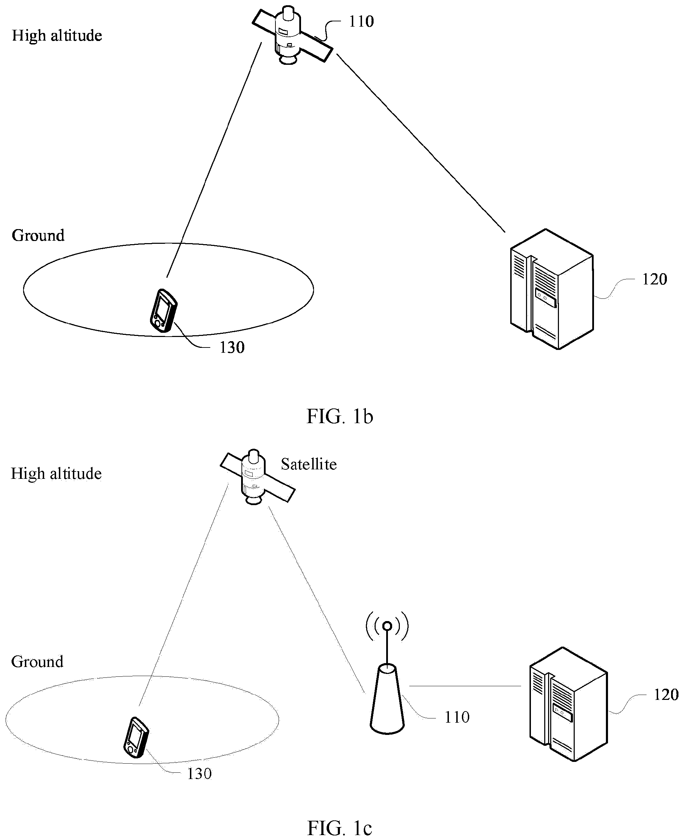

Embodiments of this application are further applicable to a satellite communication system. Two possible scenarios (which are referred to as a scenario 1 and a scenario 2) are used as examples, for example, the scenario 1 described in FIG. 1b and the scenario 2 described in FIG. 1c.

FIG. 1b is a diagram of a network architecture in a scenario 1 according to an embodiment of this application. As shown in FIG. 1b, an example in which the RAN device 110 is deployed on a satellite (for example, a near earth orbit satellite) is used. This scenario may also be referred to as a regenerative payload (regenerative payload).

FIG. 1c is a diagram of a network architecture in a scenario 2 according to an embodiment of this application. As shown in FIG. 1c, the RAN device 110 is deployed on the ground, and when the terminal device 130 communicates with the RAN device 110, the satellite forwards a signal. In this scenario, the satellite is equivalent to a relay node or a repeater, and this scenario may also be referred to as a transparent payload (transparent payload).

It should be noted that, for the transparent payload scenario, a communication process is: from a terminal to a satellite, and then to a base station on the ground. Therefore, in some descriptions, the network device is a satellite, while in some descriptions, the network device is a base station. For example, the terminal calculates a TA value based on position information of the network device and position information of the terminal. The network device is a satellite. In other words, the TA value is calculated based on the position information of the terminal and position information of the satellite. In this case, a TA value from UE to a gNB and a TA value from the satellite to the gNB need to be considered. In this way, a TA value used for uplink synchronization is complete.

The following points should be noted. (1) The satellite in embodiments of this application may be a satellite that can automatically adjust a beam (NTN with steerable beams). For example, because the satellite continuously moves around the earth, a projection of a satellite signal on the ground continuously changes. Therefore, the satellite may automatically adjust the beams, so that the projection on the ground can remain unchanged as the satellite moves.

(2) The satellite in embodiments of this application may be a high-earth orbit (geostationary earth orbiting, GEO) satellite, or may be a low earth orbit (low earth orbiting, LEO) satellite. The low earth orbit satellite may also be referred to as a near earth orbit satellite.

(3) The network architecture shown in FIG. 1a, FIG. 1b, or FIG. 1c may be applicable to communication systems of various radio access technologies (radio access technologies, RATs). For example, the communication system may be an LTE communication system, or may be a 5G (or referred to as new radio (new radio, NR)) communication system. The communication system may alternatively be a transition system between the LTE communication system and the 5G communication system. The transition system may also be referred to as a 4.5G communication system, or certainly may be a future communication system. The network architecture and the service scenario described in embodiments of this application are intended to describe the technical solutions in embodiments of this application more clearly, and do not constitute a limitation on the technical solutions provided in embodiments of this application. A person of ordinary skill in the art may know that, with evolution of communication network architectures and emergence of new service scenarios, the technical solutions provided in embodiments of this application are also applicable to similar technical problems.

To clearly describe the technical solutions in embodiments of this application, terms such as "first" and "second" are used in embodiments of this application to distinguish between same items or similar items that have basically same functions and purposes. A person skilled in the art may understand that the terms such as "first" and "second" do not limit a quantity or an execution sequence, and the terms such as "first" and "second" do not indicate a definite difference. A term "and/or" describes only an association relationship between associated objects and indicates that there may be three relationships. For example, A and/or B may represent the following three cases: Only A exists, both A and B exist, and only B exists. The character "/" generally indicates an "or" relationship between the associated objects.

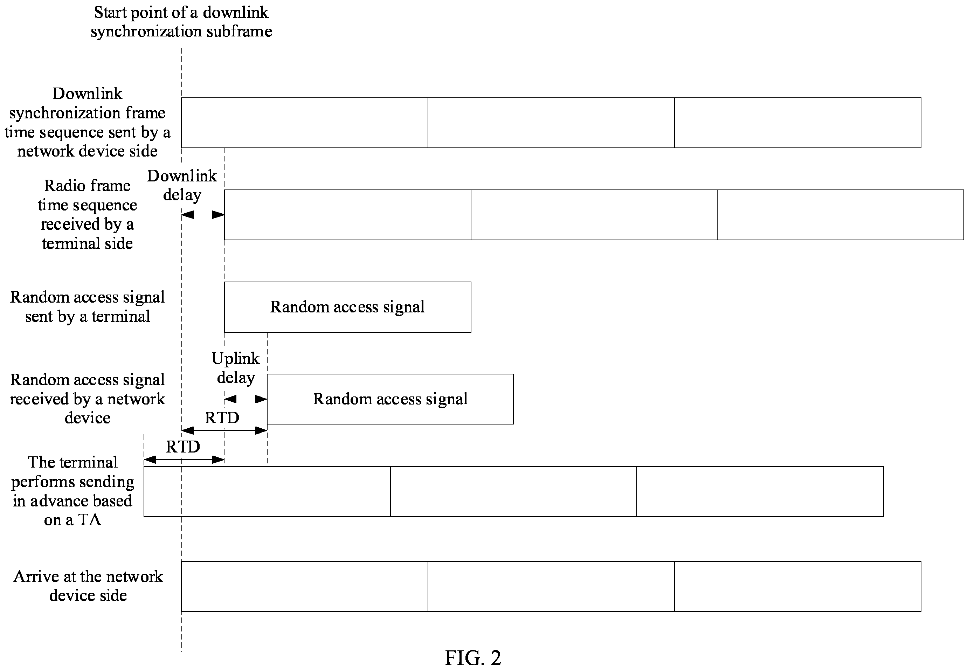

Because terminals in a cell may be at different positions, delays for uplink signals sent by the terminals to arrive at a base station are different. As a result, when the uplink signals of the terminals arrive at the base station, the uplink signals are not aligned in terms of time. For example, as shown in FIG. 2, a downlink delay exists between a start point of a downlink synchronization frame time sequence sent by a base station side and a start point of a radio frame time sequence received by a terminal side, and an uplink delay also exists between a start point of sending a random access signal by the terminal and a start point of receiving the random access signal by the base station side. That is, a round trip delay (Round Trip Delay, RTD) exists between the start point of the downlink synchronization frame time sequence sent by the base station side and the start point of receiving the random access signal by the base station side. It may be learned that the RTD varies with positions of the terminals.

To maintain uplink time synchronization of the terminals, a TA mechanism is used. For example, as shown in FIG. 2, the base station side sends the downlink synchronization frame time sequence a TA value earlier. In this case, the start point of the radio frame time sequence received by the terminal side is aligned with the start point of the downlink synchronization frame. Further, when uplink signals of the terminals arrive at the base station, the uplink signals of the terminals are aligned in terms of time, that is, uplink time synchronization.

An RTD between the terminal and the network device continuously changes, and correspondingly, a TA value required for uplink synchronization also continuously changes. Therefore, a TA reporting mechanism on the terminal side is introduced. In the TA reporting mechanism, the terminal may measure and calculate a latest TA value, and trigger TA reporting when a variation of the calculated TA value exceeds a specific threshold. However, because quality of a radio link changes, after a TA report is sent, the network device may not necessarily successfully receive the TA report. Therefore, how to improve a success rate of reporting the TA report is an urgent problem to be resolved.

This application provides a communication method 100. In the communication method 100, a terminal may trigger TA reporting and send a TA report. The TA report includes position information or TA information of the terminal. If the TA report is successfully sent, the triggered TA reporting is canceled. After triggering the TA reporting, the terminal generates and sends the TA report if there is an available uplink resource. In other words, before the TA report is successfully sent, the triggered TA reporting is not canceled. In this way, if there is another available uplink resource, the terminal continues to send the TA report over the uplink resource. Therefore, a success rate of reporting the TA report is increased.

This application further provides a communication method 200. In the communication method 200, a terminal may determine, based on a variation between a current TA value and a TA value indicated by a latest successfully sent TA report, whether to trigger TA reporting. In this way, even if the TAreport is not successfully sent, a trigger condition can be quickly met again, and the TA reporting is triggered. Therefore, this helps a network device obtain a latest TA value, thereby increasing a success rate of reporting the TA report.

The following describes embodiments of this application with reference to the accompanying drawings.

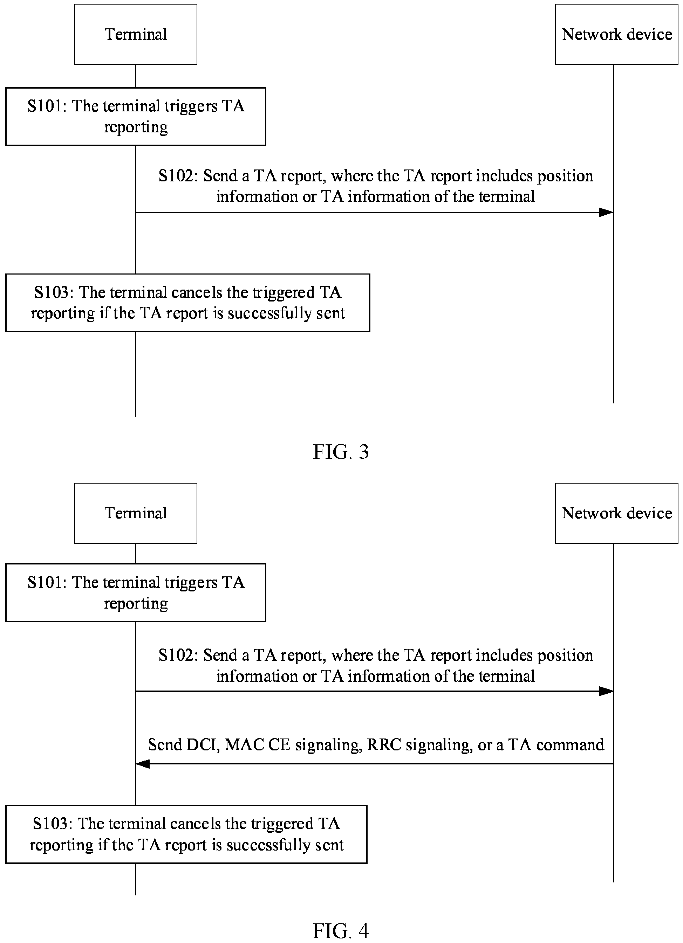

FIG. 3 is a schematic flowchart of a communication method 100 according to an embodiment of this application. As shown in FIG. 3, the communication method 100 includes but is not limited to the following steps.

S101: A terminal triggers TA reporting.

In an optional implementation, the terminal may calculate a TA value in a periodic manner or an event-triggered manner, and further determine whether to trigger the TA reporting. For example, the TA value is calculated in a periodic manner. A timer may be configured in the terminal, and a timing duration of the timer is used as a period. If the timer expires, the terminal may calculate the TA value. For another example, in an event-triggered manner, if the terminal has an uplink data transmission, the TA value may be calculated.

Optionally, when the terminal calculates the TA value may be determined by the terminal, specified in a protocol, or preconfigured by a network device. If a variation between the calculated TA value and a latest TA value sent to the network device is greater than or equal to a TA reporting trigger threshold, step S101 may be performed.

Optionally, if the terminal has not reported a TA value, the terminal may compare the calculated TA value with a default value to determine a variation, and compare the variation with the TA reporting trigger threshold. The TA reporting trigger threshold may be a value that is configured by the network device for the terminal and that is used to trigger the TA reporting, and may be sent via dedicated RRC signaling or system information. This is not limited in this application.

In another optional implementation, the terminal triggers the TA reporting based on a variation between a second TA value and a first TA value. The first TA value is a TA value indicated by a latest successfully sent TA report, and the second TA value is a TA value that determines triggering of the TA reporting.

Optionally, the second TA value may be a latest TA value calculated by the terminal based on position information of the terminal and position information of the network device (for example, a satellite device or a base station), or a TA value calculated when the terminal determines whether to trigger the TA reporting.

Optionally, that the terminal triggers the TA reporting based on a variation between a second TA value and a first TA value includes: triggering the TA reporting if the variation between the second TA value and the first TA value is greater than or equal to the TA reporting trigger threshold.

After the terminal triggers the TA reporting, the TA reporting is in a pending (pending) state, a triggered state, or a to-be-processed state. In this embodiment of this application, the pending state is used as an example for description. If the TA reporting is in the pending state, and if there is an uplink resource that can be used to send a TA report, the terminal may perform step S102 over the uplink resource.

S102: The terminal sends a TA report.

The TA report includes position information or TA information of the terminal. The position information of the terminal may include global positioning system (Global Positioning System, GPS) information or global navigation satellite system (Global Navigation Satellite System, GNSS) information of the terminal. The GNSS information is also referred to as a global navigation satellite system. When the TA report includes the TA information, the TA information may include but is not limited to the TA value. When the TA report includes the position information of the terminal, after receiving the TA report, the network device may obtain the TA value through calculation based on the position information of the network device and the position information of the terminal. In other words, the TA report may indicate the TA value. Manner a1 to Manner a3 are used in the following to describe the TA value indicated by the TA report. In addition, it should be noted that in this application, "the TA report includes position information or TA information of the terminal" may be replaced with "the TA report may indicate TA information of the terminal".

Manner a1: The TA value indicated by the TA report is a TA value during latest TA reporting triggered before the TA report is sent, or a TA value calculated by the terminal during latest TA reporting triggered before the TA report is sent. In other words, before the terminal sends the TAreport, the terminal triggers the TAreporting at least once. That is, before the terminal sends the TAreport, TAreporting includes but is not limited to the triggered TAreporting in S101. It may be understood that in this case, there are a plurality of instances of TA reporting in the pending state.

For example, it is assumed that before the terminal sends the TA report, the terminal triggers the TA reporting twice. TA1 is a TA value that triggers the TA reporting for a first time or a TA value calculated by the terminal when the TA reporting is triggered for a first time, and TA2 is a TA value that triggers the TA reporting for a second time or a TA value calculated by the terminal when the TAreporting is triggered for a second time. In this case, the TA value during the latest TA reporting triggered before the TAreport is sent is TA2. Therefore, the TA value indicated by the TA report in step S102 is TA2.

Manner a2: The TA value indicated by the TAreport is a TA value during generation of the TA report. In other words, the terminal can send the TA report only when there is an available uplink resource, instead of sending the TA report immediately after triggering the TA reporting. Therefore, when the terminal sends the TA report, the TA value indicated by the TA report is a TA value calculated by the terminal during generation of the TA report, and is not limited to the TA value during triggering of the TA reporting.

For example, it is assumed that the TA value during triggering of the TA reporting by the terminal is TA1, and the TA value calculated by the terminal when the terminal sends the TA report is TA2. In this case, the TA value indicated by the TA report is TA2.

Manner a3: The TA value indicated by the TA report is a TA value calculated by the terminal when assembling a data packet corresponding to the TA report.

Optionally, the TA report may be sent via MAC CE signaling, a TA command, or RRC signaling. In addition, optionally, if the TA report includes different information, UE may send the TA report via different signaling. An implementation is as follows: If the TA report includes the TA information, the TA report is sent via the MAC CE signaling; or if the TA report includes the position information, the TA report is sent via the RRC signaling.

S103 : Cancel the triggered TA reporting if the TA report is successfully sent.

Optionally, "Cancel the triggered TA reporting if the TA report is successfully sent" may be expressed as: "Cancel the triggered TA reporting when the TA report is successfully sent"; or may be expressed as: "The terminal cancels the triggered TA reporting if the TA report is successfully sent"; or may be expressed as: "The terminal cancels the triggered TA reporting when the TA report is successfully sent", or the like. These expressions may be replaced with each other in some cases. This is not limited in this application.

After the terminal sends the TA report, there may be a case in which the TA report fails to be sent, or a case in which the TA report is successfully sent. In step S103, if the TA report is successfully sent, the terminal cancels the triggered TA reporting, to end this triggering-reporting process. Optionally, before the TA report is successfully sent (for example, the network device does not receive the TA report or it is not sure whether the network device receives the TA report), the terminal does not cancel the triggered TA reporting. In this way, after performing step S102, the terminal may send the TA report again when there is another available uplink resource.

In this embodiment of this application, the terminal may learn, in an explicit manner or an implicit manner, whether the TA report is successfully sent. In other words, before the terminal performs step S103, as shown in FIG. 4, the network device may send DCI, the MAC CE signaling, the RRC signaling, or the TA command. Correspondingly, the terminal may receive the DCI, the MAC CE signaling, the RRC signaling, or the TA command. It may be learned that in this embodiment of this application, the terminal may be notified, via the DCI, the MAC CE signaling, the RRC signaling, or the TA command, whether the TA report is successfully sent. With reference to Implementation b1 and Implementation b2, the following further describes how the terminal learns that the TA report is successfully sent.

Implementation b1: In response to the received TA report, the network device sends feedback information to the terminal, where the feedback information indicates that the TA report is successfully sent, or indicates that the TA report is successfully received or that the network device has received the TAreport. Correspondingly, the terminal receives the feedback information. It may be learned that in this implementation, the terminal may determine, based on the feedback information, that the TA report is successfully sent. It may be understood that the network device may explicitly indicate, via the feedback information, that the TA report is successfully sent.

Optionally, the feedback information may further indicate that the TA report fails to be sent, or that the TA report fails to be received, or that the network device does not receive the TA report. It may be understood that if the terminal does not receive the feedback information by the time that a second timer expires, it may be determined that the TA report fails to be sent, and the second timer is started after the TA report is sent.

Optionally, the feedback information is carried in the DCI, the MAC CE signaling, the RRC signaling, or the TA command. Optionally, the MAC CE signaling may be newly defined MAC CE signaling dedicated to sending the feedback information.

Implementation b2: If a hybrid automatic repeat request (Hybrid automatic repeat request, HARQ) process schedules a new transmission (which may be referred to as a new transmission for short), the terminal determines that the TAreport is successfully sent. The HARQ process is a HARQ process used to send the TA report. For uplink and downlink transmissions, in each transmission, the network device indicates, in the DCI via a HARQ process number, a process used in a current transmission, and indicates whether the current transmission is used for a new transmission or a retransmission based on whether a value of a new data indicator (new data indicator, NDI) is flipped (or the same) relative to a previous NDI value. For example, if DCI received by the terminal indicates a HARQ process number 1, the HARQ process number 1 is a HARQ process number used by the terminal to send the TA report. In addition, if an NDI value indicated by the DCI is flipped relative to an NDI value transmitted last time (that is, different from a previous NDI value) of the HARQ process number 1, the DCI indicates that the HARQ process number 1 is used for a new transmission. Therefore, in this implementation, the terminal determines whether the HARQ process number used to send the TA report is used to schedule a new transmission, to determine whether the TA report is successfully sent. If the new transmission is scheduled, it indicates that the network device successfully receives the TA report.

For a network device side, after receiving the TA report, the network device may send first information. The first information may indicate that the TA report is successfully sent, or indicate that the HARQ process schedules a new transmission. In other words, the first information includes but is not limited to the foregoing feedback information.

It may be learned that in the communication method 100, if the TAreport is successfully sent, the triggered TA reporting is canceled. Before it is determined that the TA report is successfully sent, the triggered TA reporting is not canceled. In this way, if there is another available uplink resource, the terminal further sends the TA report again over the uplink resource. Therefore, a delay caused by re-triggering the TA reporting is reduced, and a success rate of reporting the TAreport is increased. In addition, as described above, the terminal determines, based on the TA value indicated by the latest successfully sent TA report, whether to trigger the TA reporting. This helps quickly trigger the TA reporting and send the TAreport, thereby increasing a success rate of reporting the TA report. In this way, the network device learns of a latest TA report in a timely manner, and scheduling efficiency is improved.

For the communication method 100, this embodiment of this application further includes but is not limited to the following several implementations.

In an optional implementation, before the TA report is successfully sent, a random access procedure is triggered immediately if a time alignment timer expires. In this way, because the TA report has not been successfully sent, the TA reporting is still in the pending state, so that the TA report can be sent again in a timely manner in the random access procedure or after the random access procedure ends. Therefore, the TA report can be reported in a more timely manner, so that the network device obtains a latest TA report.

Both the network device and the terminal maintain a time alignment timer (time alignment timer), and a duration of the time alignment timer is configured by the network device. In the random access procedure or after the terminal enters a connected mode, the network device sends a TA configuration to the terminal. After receiving the TA configuration sent by a base station, the terminal starts a time alignment timer. Correspondingly, after receiving positive feedback of the terminal on the TA configuration, the network device also starts the time alignment timer, and timing durations of the time alignment timer maintained by the network device and the terminal are consistent. When the terminal is in a connected state, the terminal sends a TA command to the network device. After receiving the TA command, the network device restarts the time alignment timer.

If timing alignment timers maintained by the network device and the terminal run until timeout, and the TA report has not been received or the terminal has not learned that the TA report is successfully sent, the network device and the terminal consider that the terminal is in an uplink out-of-synchronization state. In this case, the terminal releases an uplink resource of a cell corresponding to the timing alignment timer, stops an uplink transmission except random access, and immediately triggers a random access procedure. In this way, the terminal may send the TA report in a random access message in the random access procedure, or send the TA report after the random access procedure ends. Compared with an existing manner in which a random access procedure is triggered only when there is an uplink data transmission, this manner can report a TA report in a more timely manner after uplink out-of-synchronization, so that the network device obtains a latest TA value.

In an optional implementation, as described above, after triggering the TA reporting and before sending the TA report, the terminal may further trigger the TA reporting. In another optional implementation, after the terminal triggers the TA reporting and before the terminal cancels the TA reporting, the terminal no longer triggers the TA reporting. In still another optional implementation, after sending the TAreport, the terminal may start a first timer, and during running of the first timer, the terminal prohibits triggering of the TA reporting. Optionally, when the first timer expires, the TA reporting may be triggered. In still another optional implementation, after sending the TA report, the terminal may start a first timer, and during running of the first timer, the terminal prohibits sending of the TAreport. The TAreport may be all TA reports in general, or may be another TA report other than the TA report sent in step S102. The TA report sent in step S102 herein refers to a TA report sent when the first timer is triggered to start. Because it is not sure whether the TAreport is successfully sent, the TAreport is allowed to be sent again or retransmitted, so that a sending success rate can be increased.

This application further provides a communication method 200. In the communication method 200, a terminal determines, based on a variation between a second TA value and a first TA value, whether to trigger TA reporting. The first TA value is a TA value indicated by a latest successfully sent TA report, and the second TA value is a TA value that determines triggering of the TA reporting. Optionally, the second TA value may be a latest TA value calculated by the terminal or a TA value calculated when the terminal determines whether to trigger the TAreporting.

It may be learned that the communication method 200 determines, based on the TA value indicated by the latest successfully sent TA report, whether to trigger the TA reporting. This helps quickly meet a trigger condition even if the TA report is not successfully sent, and trigger next TA reporting to send the TA report. Therefore, this helps a network device obtain a latest TA report, thereby increasing a success rate of reporting the TA report.

Optionally, a timer may be configured for the terminal. If the timer expires, the terminal may determine, based on the variation between the second TA value and the first TA value, whether to trigger the TA reporting, and restart the timer.

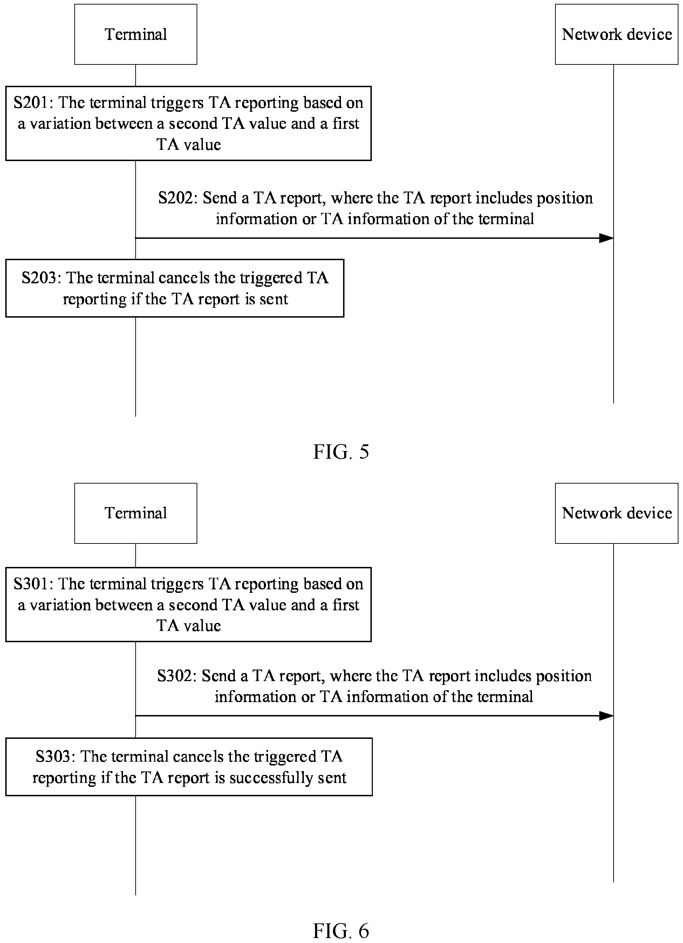

In an optional implementation, as shown in FIG. 5, the communication method 200 includes the following steps.

S201: A terminal triggers TAreporting based on a variation between a second TA value and a first TA value.

S202: The terminal sends a TA report, where the TA report includes position information or TA information of the terminal.

S203: The terminal cancels the triggered TA reporting if the TA report is sent.

In this way, when the terminal triggers the TAreporting, the TAreporting is in a pending state, and after sending the TA report, the terminal cancels the triggered TA reporting. Even if the TA report is not successfully sent (or it is not sure whether the TA report is successfully sent), the terminal may also trigger next TA reporting as soon as possible based on the variation between the second TA value and the first TA value, so that the network device can also learn of a latest TA report as soon as possible.

In another optional implementation, as shown in FIG. 6, the communication method 200 includes the following steps.

S301: A terminal triggers TAreporting based on a variation between a second TA value and a first TA value.

S302: The terminal sends a TA report, where the TA report includes position information or TA information of the terminal.

S303: The terminal cancels the triggered TA reporting if the TA report is successfully sent.

In this way, the TA reporting is in a pending state, and the terminal may send the TA report again in a timely manner. In addition, the terminal may also trigger next TAreporting and send a next TA report as soon as possible based on the variation between the second TA value and the first TA value, so that the network device can learn of a latest TA report as soon as possible.

Optionally, for descriptions of related concepts or implementations of steps S201 to S203 in FIG. 5 and steps S301 to S303 in FIG. 6, refer to related content in the communication method 100. Details are not described herein again.

In this embodiment of this application, in the communication method 200 shown in FIG. 6, how the terminal learns whether the TA report is successfully sent may be implemented according to several implementations described in the communication method 100. For example, the terminal receives feedback information, and the feedback information indicates that the TA report is successfully sent, so that the terminal learns that the TA report is successfully sent. For another example, whether the TA report is successfully sent is determined based on whether the HARQ process schedules a new transmission. For details, refer to related descriptions in the communication method 100. Details are not described herein again.

A duration of the timer in the communication method 100 or the communication method 200 may be configured by the network device or specified in a protocol. Optionally, the network device may dynamically enable or disable a timer. If a timer is disabled, the timer is not started. For example, a first timer is started after the TAreport is sent. If the network device disables the first timer, the terminal does not start the first timer after sending the TA report. Correspondingly, the terminal is allowed to send the TA report or another TA report again, or the terminal is allowed to trigger the TA reporting again. For another example, a second timer is also started after the TA report is sent. If the network device disables the second timer, the terminal does not start the second timer after sending the TA report. Correspondingly, before receiving feedback information, the terminal does not determine that the TA report fails to be sent, and the TA reporting is in the pending state.

In the foregoing embodiments, descriptions of embodiments have respective focuses. To avoid redundancy, for a part that is not described in detail in an embodiment, refer to related descriptions in other embodiments. In addition, a combination layout between various implementations and optional implementations of other content includes but is not limited to the foregoing embodiments. It is explicitly and implicitly understood by a person skilled in the art that an embodiment described in this application may be combined with another embodiment.

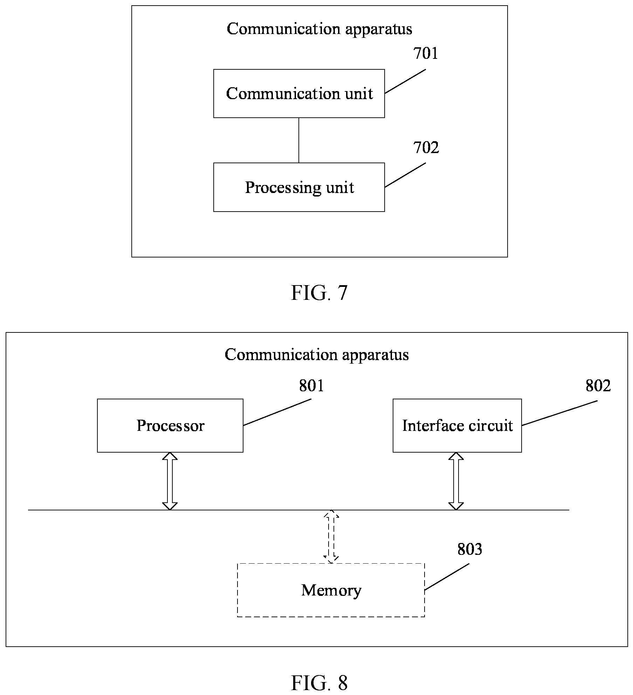

To implement various functions in any one of the communication methods provided in embodiments of this application, the access network device, the user equipment, or the core network device may separately include a hardware structure and a software module. The foregoing various functions are implemented in a form of the hardware structure, the software module, or a combination of the hardware structure and the software module. One of the foregoing various functions may be performed in a form of the hardware structure, the software module, or a combination of the hardware structure and the software module. FIG. 7 and FIG. 8 are diagrams of structures of possible communication apparatuses according to an embodiment of this application. These communication apparatuses may be configured to implement functions of the terminal or the network device in the foregoing method embodiments. Therefore, beneficial effects of the foregoing method embodiments can also be implemented.

The communication apparatus shown in FIG. 7 may include a communication unit 701 and a processing unit 702. The communication unit 701 may include a sending unit and a receiving unit. The sending unit is configured to implement a sending function, the receiving unit is configured to implement a receiving function, and the communication unit 701 may implement a sending function and/or a receiving function. The communication unit may also be described as a transceiver unit.

The communication apparatus shown in FIG. 7 may be a terminal, or may be an apparatus in a terminal.

In an optional implementation, the communication apparatus may implement related operations of the terminal in the communication method 100. The processing unit 702 is configured to trigger timing advance TA reporting. The communication unit 701 is configured to send a TAreport, where the TAreport includes position information or TA information of a terminal. The processing unit 702 is further configured to cancel the triggered TA reporting if the TA report is successfully sent.

For more detailed descriptions of the processing unit 702 and the communication unit 701, refer to related descriptions in the foregoing method embodiments.

The communication apparatus shown in FIG. 7 may be a network device, or may be an apparatus in a network device.

In another optional implementation, the communication apparatus may implement related operations of the terminal in the communication method 200. The processing unit 702 is configured to trigger TA reporting based on a variation between a second TA value and a first TA value. The communication unit 701 is configured to send a TAreport, where the TAreport includes position information or TA information of a terminal.

For more detailed descriptions of the processing unit 702 and the communication unit 701, refer to related descriptions in the foregoing method embodiments.

In an implementation, the communication apparatus may implement related operations of the network device in the communication method 100 or the communication method 200. The communication unit 701 is configured to receive a TAreport, where the TAreport includes position information or TA information of a terminal. The communication unit 701 is further configured to send feedback information, where the feedback information indicates that the TA report is successfully sent or indicates that a new transmission is scheduled using a hybrid automatic repeat request HARQ process. The HARQ process is a HARQ process used to send the TA report.

For more detailed descriptions of the processing unit 702 and the communication unit 701, refer to related descriptions in the foregoing method embodiments.

The communication apparatus shown in FIG. 8 may include a processor 801 and an interface circuit 802. The processor 801 and the interface circuit 802 are coupled to each other. It may be understood that the interface circuit 802 may be an interface circuit or an input/output interface. Optionally, the communication apparatus shown in FIG. 8 may further include a memory 803, configured to store instructions executed by the processor 801, or store input data required by the processor 801 to run instructions, or store data generated after the processor 801 runs instructions.

The communication apparatus is a terminal or an apparatus in a terminal. The interface circuit 802 performs S102 in FIG. 3 or FIG. 4, and the processor 801 performs S101 and S103 in FIG. 3 or FIG. 4. Alternatively, the interface circuit 802 performs S202 in FIG. 5, and the processor 801 performs S201 and S203 in FIG. 5. Alternatively, the interface circuit 802 performs S302 in FIG. 6, and the processor 801 performs S301 and S303 in FIG. 6.

The communication apparatus is a network device or an apparatus in a network device. The interface circuit 802 sends DCI, MAC CE signaling, or a TA command in FIG. 4 to send feedback information, schedules a new transmission using a HARQ process, or receives a TA report in FIG. 3 to FIG. 6.

When the communication apparatus is a module used in a network device, the module in the network device implements a function of the network device in the foregoing method embodiments. The module in the network device receives information from another module (for example, a radio frequency module or an antenna) in the network device, where the information is sent by a terminal to the network device. Alternatively, the module in the network device sends information to another module (for example, a radio frequency module or an antenna) in the network device, where the information is sent by the network device to a terminal. The module in the network device herein may be a baseband chip of the network device, or may be a DU or another module. The DU herein may be a DU in an open radio access network (open radio access network, O-RAN) architecture.

It should be understood that the processor mentioned in embodiments of this application may be a CPU, or may be another general purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, discrete hardware component, or the like. The general-purpose processor may be a microprocessor, or the processor may be any conventional processor or the like.

It should be further understood that the memory mentioned in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general purpose processor, a DSP, an ASIC, an FPGA or another programmable logic device, a discrete gate or transistor logic device, or a discrete hardware component, the memory (storage module) is integrated into the processor.

It should be noted that the memory described in this specification aims to include but is not limited to these memories and any memory of another proper type.

It should be understood that, in embodiments of this application, sequence numbers of the foregoing processes do not mean execution sequences. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, modules and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and module, refer to a corresponding process in the foregoing method embodiments. Details are not described herein again.

In the several embodiments provided in this application, it should be understood that the disclosed communication method and apparatus may be implemented in other manners. For example, the described apparatus embodiment is merely an example. For example, the module division is merely logical function division and may be other division in actual implementation. For example, a plurality of modules or components may be combined or integrated into another system, or some features may be ignored or not performed. In addition, the displayed or discussed mutual coupling or direct coupling or communication connection may be indirect coupling or communication connection through some interfaces, apparatuses, or units, and may be in electrical, mechanical, or other forms.

The modules described as separate parts may or may not be physically separate, and parts displayed as modules may or may not be physical modules, may be located in one position, or may be distributed on a plurality of network units. Some or all of the units may be selected based on actual requirements to achieve the objectives of the solutions of embodiments.

In addition, functional modules in embodiments of this application may be integrated into one processing module, or each of the modules may exist alone physically, or two or more modules may be integrated into one module.

When the functions are implemented in a form of a software functional module and sold or used as an independent product, the functions may be stored in a computer-readable storage medium. Based on such an understanding, the technical solutions of this application essentially, or the part that makes a contribution, or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The computer-readable storage medium may be any usable medium that can be accessed by a computer. As an example rather than a limitation, the computer-readable medium may include a random access memory (random access memory, RAM), a read-only memory (read-only memory, ROM), an electrically erasable programmable read-only memory (electrically erasable programmable read only memory, EEPROM), a compact disc read-only memory (compact disc read-only memory, CD-ROM), a universal serial bus flash disk (universal serial bus flash disk), a removable hard disk or another optical disc storage, a magnetic disk storage medium or another magnetic storage device, or any other medium that can be used to carry or store expected program code in a form of an instruction or a data structure and that can be accessed by a computer.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application should be subject to the protection scope of the claims.

## Claims

1. A communication method, wherein the method comprises:
triggering timing advance TA reporting;
sending a TAreport, wherein the TAreport comprises position information or TA information of a terminal; and
canceling the triggered TA reporting if the TA report is successfully sent.

2. The method according to claim 1, wherein the method further comprises:
triggering the TA reporting based on a variation between a second TA value and a first TA value, wherein
the first TA value is a TA value indicated by a latest successfully sent TA report, and the second TA value is a TA value that determines triggering of the TA reporting.

3. The method according to claim 1 or 2, wherein the method further comprises:
before the TA report is successfully sent, triggering a random access procedure if a time alignment timer expires.

4. The method according to any one of claims 1 to 3, wherein the method further comprises:
starting a first timer after sending the TA report, wherein
the first timer is configured to prohibit the terminal from sending the TAreport during running.

5. The method according to any one of claims 1 to 4, wherein
the TA value indicated by the TA report is a TA value during latest TA reporting triggered before the TA report is sent; or
the TA value indicated by the TA report is a TA value during generation of the TA report.

6. The method according to any one of claims 1 to 5, wherein the method further comprises:
receiving feedback information, wherein the feedback information indicates that the TA report is successfully sent; or
if a hybrid automatic repeat request HARQ process schedules a new transmission, determining that the TAreport is successfully sent, wherein the HARQ process is a HARQ process used to send the TA report.

7. The method according to claim 6, wherein
the feedback information indicates that the TA report fails to be sent; or
the method further comprises:
if the feedback information is not received by the time that a second timer expires, determining that the TA report fails to be sent, wherein the second timer is started after the TA report is sent.

8. The method according to any one of claims 1 to 7, wherein the feedback information is carried in downlink control information DCI, medium access control control element MAC CE signaling, or radio resource control RRC signaling.

9. The method according to any one of claims 1 to 7, wherein the TA report is sent via MAC CE signaling or radio resource control RRC signaling.

10. The method according to claim 2, wherein the triggering the TA reporting based on a variation between a second TA value and a first TA value comprises:
triggering the TA reporting if the variation between the second TA value and the first TA value is greater than or equal to a TA reporting trigger threshold.

11. A communication method, wherein the method further comprises:
receiving a TA report, wherein the TA report comprises position information or TA information of a terminal; and
sending first information, wherein the first information indicates that the TA report is successfully sent or indicates that a new transmission is scheduled using a hybrid automatic repeat request HARQ process, wherein the HARQ process is a HARQ process used to receive the TA report.

12. The method according to claim 11, wherein the first information is carried in downlink control information DCI, medium access control control element MAC CE signaling, or radio resource control RRC signaling.

13. The method according to claim 11, wherein the TA report is received via MAC CE signaling or radio resource control RRC signaling.

14. A communication apparatus, wherein the apparatus comprises:
a processing unit, configured to trigger timing advance TA reporting; and
a communication unit, configured to send a TA report, wherein the TA report comprises position information or TA information of a terminal, wherein
the processing unit is further configured to cancel the triggered TA reporting if the TA report is successfully sent.

15. The apparatus according to claim 14, wherein
the processing unit is configured to trigger the TA reporting based on a variation between a second TA value and a first TA value, wherein
the first TA value is a TA value indicated by a latest successfully sent TA report, and the second TA value is a TA value that determines triggering of the TA reporting.

16. The apparatus according to claim 14, wherein
the processing unit is further configured to: before the TA report is successfully sent, trigger a random access procedure if a time alignment timer expires.

17. The apparatus according to claim 14, wherein
the processing unit is further configured to start a first timer after the TA report is sent, wherein
the first timer is configured to prohibit the communication apparatus from sending the TA report during running.

18. The apparatus according to claim 14, wherein
the TA value indicated by the TA report is a TA value during latest TA reporting triggered before the TA report is sent; or
the TA value indicated by the TA report is a TA value during generation of the TA report.

19. The apparatus according to any one of claims 14 to 18, wherein
the communication unit is further configured to receive feedback information, wherein the feedback information indicates that the TA report is successfully sent; or
the processing unit is further configured to: if a hybrid automatic repeat request HARQ process schedules a new transmission, determine that the TA report is successfully sent, wherein the HARQ process is a HARQ process used to send the TA report.

20. The apparatus according to claim 19, wherein
the feedback information indicates that the TA report fails to be sent; or
the processing unit is further configured to: if the feedback information is not received by the time that a second timer expires, determine that the TA report fails to be sent, wherein the second timer is started after the TA report is sent.

21. The apparatus according to claim 19, wherein the feedback information is carried in downlink control information DCI, medium access control control element MAC CE signaling, or radio resource control RRC signaling.

22. The apparatus according to claim 14, wherein the TA report is sent via medium access control control element MAC CE signaling or radio resource control RRC signaling.

23. The apparatus according to claim 15, wherein that the processing unit triggers TA reporting based on a variation between a second TA value and a first TA value is specifically:
triggering the TA reporting if the variation between the second TA value and the first TA value is greater than or equal to a TA reporting trigger threshold.

24. A communication apparatus, wherein the apparatus further comprises:
a communication unit, configured to receive a TA report, wherein the TA report comprises position information or TA information of a terminal, wherein
the communication unit is further configured to send first information, wherein the first information indicates that the TA report is successfully sent or indicates that a new transmission is scheduled using a hybrid automatic repeat request HARQ process, wherein the HARQ process is a HARQ process used to send the TA report.

25. The apparatus according to claim 24, wherein the first information is carried in downlink control information DCI, medium access control control element MAC CE signaling, or radio resource control RRC signaling.

26. The apparatus according to claim 24, wherein the TAreport is received via medium access control control element MAC CE signaling or radio resource control RRC signaling.

27. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement the method according to any one of claims 1 to 10 by using a logic circuit or by executing code instructions.

28. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement the method according to any one of claims 11 to 13 by using a logic circuit or by executing code instructions.

29. A computer-readable storage medium, wherein the storage medium stores a computer program or instructions, and when the computer program or the instructions are executed by a communication apparatus, the method according to any one of claims 1 to 10 is implemented.

30. A computer-readable storage medium, wherein the storage medium stores a computer program or instructions, and when the computer program or the instructions are executed by a communication apparatus, the method according to any one of claims 11 to 13 is implemented.

31. A communication system, wherein the communication system comprises a communication apparatus configured to perform the method according to any one of claims 1 to 10, and a communication apparatus configured to perform the method according to any one of claims 11 to 13.

32. A communication apparatus, comprising a processor and a transceiver, wherein
the transceiver is configured to communicate with another communication apparatus, and the processor is configured to run a computer program, to enable the communication apparatus to implement the method according to any one of claims 1 to 10, or implement the method according to any one of claims 11 to 13.

33. A communication apparatus, comprising a memory, a processor, and a transceiver, wherein
the transceiver is configured to receive a signal or send a signal, the memory is configured to store instructions or a computer program, and the processor is configured to execute the computer program or the instructions stored in the memory, to enable the communication apparatus to perform the method according to any one of claims 1 to 10, or implement the method according to any one of claims 11 to 13.

34. A computer program product, comprising computer instructions, wherein when the computer instructions are run on a computer, the computer is enabled to perform the method according to any one of claims 1 to 10, or implement the method according to any one of claims 11 to 13.
